Europäisches Patentamt

European Patent Office

Office européen des brevets

(11) Veröffentlichungsnummer: **0 111 125**
**B1**

(12) # EUROPÄISCHE PATENTSCHRIFT

(45) Veröffentlichungstag der Patentschrift:
15.10.86

(21) Anmeldenummer: 83110620.8

(22) Anmeldetag: 25.10.83

(51) Int. Cl.⁴: **F 16 C 33/58**

(54) **Wälzlager für Radialbewegungen.**

(30) Priorität: 30.11.82 DE 3244258

(43) Veröffentlichungstag der Anmeldung:
20.06.84 Patentblatt 84/25

(45) Bekanntmachung des Hinweises auf die Patenterteilung:
15.10.86 Patentblatt 86/42

(84) Benannte Vertragsstaaten:
CH DE FR GB IT LI SE

(56) Entgegenhaltungen:
DE-A-2 446 531
DE-A-3 108 658
DE-C-327 651
FR-A-1 030 438
FR-A-1 128 197
FR-A-2 151 282
FR-A-2 159 074
FR-A-2 232 960
FR-A-2 239 149
FR-A-2 497 302
US-A-3 140 130
US-A-3 304 138

(73) Patentinhaber: **Firma Carl Zeiss, D-7920
Heidenheim (Brenz) (DE)**
(84) Benannte Vertragsstaaten: **CH DE FR IT LI SE**

(73) Patentinhaber: **CARL- ZEISS- STIFTUNG trading as
CARL ZEISS, D-7920 Heidenheim (Brenz) (DE)**
(84) Benannte Vertragsstaaten: **GB**

(72) Erfinder: **Herzog, Klaus, Ing. (grad.),
Kopernikusstrasse 42, D-7082 Oberkochen (DE)**
Erfinder: **Szenger, Franz, Dipl.- Ing.,
Wielandstrasse 14, D-7923 Königsbronn (DE)**

**Beschreibung**

Als Wälzlager für Radialbewegungen werden üblicherweise Kugellager oder Rollenlager in Form von konfektionierten Bauteilen verwendet, die in die entsprechend vorbereitenden Lagersitze eingebaut werden. An die Formgenauigkeit aller den Lagersitz bestimmenden Bauteile und an die Sorgfalt beim Einbau sind höchste Anforderungen zu stellen, wenn Laufgenauigkeiten der so gelagerten Welle im μm-Bereich erzielt werden sollen.

Für Laufgenauigkeiten im Bereich zwischen ca. 0,6 μm und 1 μm werden komplette Spindeleinheiten angeboten, die mehrere zueinander gepaßte Kugellager enthalten. Derartige Einheiten sind voluminös und teuer.

In der FR-A-2497302 ist eine derartige Präzisionsspindel beschrieben. Darin sind zwei Gruppen von Wälzlagern in je eine über die Außenringe der Wälzlager gelegte Hülse gefaßt, die ihrerseits unter Verwendung von Kunstharz in die Lagerbuchse eingebettet sind. Die Wälzlager selbst sind herkömmliche Bauteile, mit eigenem Innen- und Außenring, die in bekannter Weise durch z.B. achsiales Verspannen spielfrei gemacht werden müssen. Die Laufgenauigkeit dieser Spindel wird durch die Toleranzen bestimmt, mit denen die Laufringe der einzelnen Wälzlager gefertigt sind.

Hochgenaue Wälzlager für Spezialanwendungen werden daher oft als Sonderanfertigung für den vorgesehenen Einsatz ausgeführt. In derartigen Lagern rollen die Wälzkörper in der Regel auf direkt an die zu lagernden Teile angearbeiteten Laufbahnen ab. Dazu müssen Welle und Hülse bezüglich der Laufflächen mit höchster Präzision zueinander gepaßt werden. Dies Verfahren ist verhältnismäßig aufwendig und garantiert dennoch nicht in jedem Falle die gewünschte Laufgenauigkeit.

Laufgenauigkeiten im Bereich hinunter zu einigen hundertstel μm können zwar mit hydrostatischen Lagern oder Gaslagern erzielt werden. Derartige Lager sind aber wegen das damit verbundenen Versorgungsaggregats unhandlich und ebenfalls sehr teuer.

Aus der FR-A-2239149 ist ein Rollenlager für z.B. die Lenkspindel in einem Automobil bekannt, dessen Außenring geschlitzt ist und von einem zwischen dem Lagergehäuse und dem Außenring unter Spannung eingesetzten elastischen Zwischenschicht aus z.B. Kautschuk spielfrei gemacht ist. Die Zwischenschicht hat dort die Aufgabe durch Abnutzung entstehendes Spiel zu beseitigen. Für Hochgenauigkeitsanwendungen ist dieses Lager nicht geeignet, da es aufgrund der relativ dicken elastischen Zwischenschicht nur eine geringe Steifigkeit besitzt.

Unter der Bezeichnung "Frakturlager" werden Kugellager mit hoher Tragzahl angeboten, die einen mit einer Bruchstelle versehenen Außenring besitzen. Zur Herstellung dieses Lagers wird der Außenring geritzt, danach hochgenau geschliffen, in Bezug auf den Innenring gepaart und ein Kugelsatz ausgewählt, der dem beabsichtigten Lagerspiel entspricht. Anschließend wird der Außenring gesprengt und die Kugeln werden durch die geweitete Bruchstelle in das Lager eingefüllt. Über den Außenring gelegte Spannringe sorgen dafür, daß die Bruchflächen des Außenringes sich wieder exakt aufeinanderlegen.

Derartige Lager sind nicht von vornherein spielfrei sondern müssen in bekannter Weise verspannt werden.

Der Erfindung liegt die Aufgabe zugrunde, eine spielfreie Radiallagerung mit Laufgenauigkeiten im Bereich unter 1 μm zu schaffen, die ohne permanente Druckmittelzufuhr auskommt und einen relativ geringen Herstellungsaufwand erfordert.

Ausgehend von einem Wälzlager nach dem Oberbegriff wird diese Aufgabe dadurch gelöst, daß

- die Wälzkörper Kugeln sind, die direkt auf den Flanken von in die Welle eingeschliffenen Nuten (2;12;22;29) oder auf in die Nuten (24) eingelegten Drähten (49) abrollen,

- die Verspannung durch um den Außenring gelegte Spannringe oder Drähte aufgebracht ist und

- der dünnwandige, durch die Verspannung an die innere Laufbahn angepaßte Außenring mit Fügemitteln in das äußere Lagerteil (6;16) eingebettet ist.

Bei der erfindungsgemäßen Lagerung ist es nicht nötig die Laufbahnen der Welle und die des Außenringes zueinander zu passen. Die Laufbahn in dem geschlitzten Außenring kann vielmehr mit weit geringerer Genauigkeit gefertigt werden, da der Außenring sich beim Einbau infolge seiner Dünnwandigkeit und wegen des Schlitzes über die Wälzkörper hochgenau an die innere Laufbahn anpaßt. Infolge der Verspannung des Lagers mit Hilfe eines elastischen Drahtes bzw. Bandes bei endlicher Schlitzbreite wirken über den Lagerumfang konstante, rein radial gerichtete Spannkräfte auf die Wälzkörper des Lagers. Damit ist vollkommene Spielfreiheit erreicht, ohne daß sich das Lager beim Spannen verzieht.

Überraschenderweise stört der verbleibende Schlitz endlicher Breite, der quer über die Laufbahn des Außenringes verläuft, die Laufgenauigkeit des Lagers nicht, insbesondere dann nicht, wenn die Laufbahn des Außenringes im Bereich des Schlitzes angeschrägt ist.

Ein zweckmäßiges Verfahren zur Herstellung des erfindungsgemäßen Lagers läuft folgendermaßen ab:

Zuerst werden in die zu lagernden Welle eine bzw. mehrere Laufbahnen für die Wälzkörper hochgenau eingeschliffen, zweckmäßigerweise in einer Aufspannung auf der dafür nötigen Bearbeitungsmaschine. Anschließend wird der bzw. werden die mit der jeweiligen äußeren Laufbahn versehenen, dünnen Außenringe geschlitzt und um die Welle gelegt. Die Außenringe werden dann gedehnt und die Wälzkörper werden zweckmäßig durch den erweiterten Schlitz in das Lager eingeführt. Der Durchmesser der Wälzkörper ist dabei so groß gewählt, daß sich der Außenring nach Beendigung des Füllvorganges beim Zurückkehren in seine Ruhelage an die Wälzkörper anlegt und sich der Schlitz nicht völlig schließen kann. Anschließend werden die Außenringe jeweils mit einem unter konstanter Spannung stehenden Draht oder Band umwickelt. Nach dem Fixieren der Drähte bzw. Bänder wird die mit den Lagern versehene Welle in das Lagergehäuse eingebaut, wobei die Außenringe mit Fügemitteln, beispielsweise Metallklebern, in die Hülse eingebettet werden.

Die inneren Laufbahnen sind als in die z.B. gehörtete Welle eingeschliffene Nuten ausgebildet, auf deren Flanken die Wälzkörper direkt abrollen. Es ist jedoch auch möglich in die an die Welle angearbeiteten Laufbahnen Drähte einzulegen, auf denen die Wälzkörper nach Art eines Franke-Lagers abrollen.

Zur Herstellung hochgenauer Spindeleinheiten mit großer Steifigkeit werden zweckmäßig mehrere Laufbahnen an die zu lagernde Welle angearbeitet, und jeder Laufbahn wird ein separater, geschlitzter Außenring zugeordnet.

Rollen die Wälzkörper auf jeweils beiden Flanken von v-förmigen Nuten in der Welle und des Außenringes ab, so tritt wie auch in Drahtkugellagern der Effekt der sogenannten "bohrenden Reibung" auf. Eine besonders leichtgängige Ausbildung des Lagers wird dann erreicht, wenn die Laufbahnen als Doppelnuten ausgebildet sind, denen jeweils ein gemeinsamer, geschlitzter Außenring zugeordnet ist, und die Abstände zwischen den Nuten der Welle und des Außenringes unterschiedlich gewählt sind. Damit wird erreicht, daß sich die Wälzkörper jeweils nur an eine Flanke der Nuten anlegen, so daß reine Rollreibung auftritt.

Zum besseren Verständnis der Erfindung werden nachfolgend Ausführungsbeispiele anhand der Fig. 1-5 der beigefügten Zeichnungen näher erläutert:

Fig. 1a zeigt die Prinzipskizze eines ersten Ausführungsbeispiels eines erfindungsgemäßen Lagers in einem die Drehachse enthaltenen Schnitt;

Fig. 1b zeigt einen weiteren Schnitt längs der Linie B-B in Fig. 1a;

Fig. 1c ist eine perspektivische Darstellung des Außenringes des Lagers aus Fig. 1 und 2 im Bereich des Schlitzes 7;

Fig. 2 skizziert eine mit mehreren Lagern gemäß Fig. 1 versehene Spindeleinheit;

Fig. 3 zeigt die Prinzipskizze eines leicht abgewandelten, zweiten Ausführungsbeispiels eines Lagers;

Fig. 4 skizziert ein sogenanntes Franke-Lager in herkömmlicher Ausführung;

Fig. 5 skizziert ein drittes, als Franke-Lager ausgebildetes Beispiel der Erfindung.

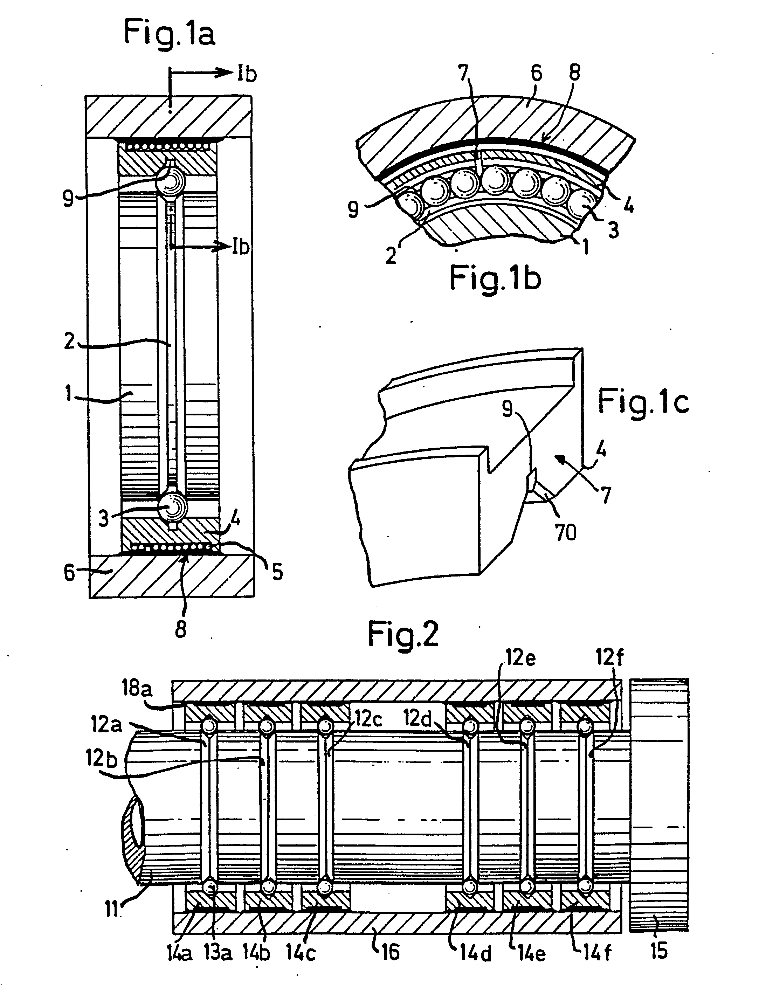

Das in den Fig. 1a und 1b dargestellte Lager besteht aus einer Welle 1, die gegenüber dem Gehäuse 6 drehbar gelagert ist. Dazu ist in die Welle 1 eine Laufbahn 2 mit hoher Genauigkeit eingeschliffen, auf der die Kugeln 3 abrollen.

Um die Kugeln 3 ist ein mit einem Schlitz 7 versehener, dünnwandiger Ring 4 gelegt, in den die äußere Laufbahn 9 eingeschliffen ist. Verglichen mit der Laufbahn 2 ist die Laufbahn 9 mit geringerer Laufgenauigkeit gefertigt worden. Für den Durchmesser der Laufbahn 9 sind keine engen Toleranzen einzuhalten, da der Schlitz 7 Fertigungsabweichungen überbrückt. Auf den Ring 4 sind mehrere Windungen eines Federstrahldrahtes 5 unter Vorspannung aufgewickelt. Fixiert ist der Ring 4 in dem Gehäuse 6 mit Hilfe von handelsüblichen Fügemitteln 8.

Wie Fig. 1c zeigt ist an die Laufbahn 9 des Außenringes 4 im Bereich des Schlitzes 7 eine Schräge 70 angearbeitet, die einen ruhigen Lauf des Lagers gewährleistet.

Mehrere der vorstehend beschriebenen Lagereinheiten dienen zur Lagerung der in Fig. 2 dargestellten Spindeleinheit. Die mit dem Abschlußteller 15 versehene Welle 11 der Spindeleinheit ist mit je 3 Lagern in 2 Gruppen gegenüber dem Gehäuse 16 gelagert. Dazu sind an die Welle 11 in einer Maschinenaufspannung 6 Laufbahnen 12a-f eingeschliffen worden, um die jeweils ein separater Außenring 14a-f gelegt ist.

Zwischen den Außenringen 14a-f und den Laufbahnen 12a-f rollen die Kugeln 13a-f der Lagerkomponenten ab. Jedes der Lagerkomponenten 12-14a,b,c,d,e und f besitzt den gleichen, in Fig. 1 bereits beschriebenen Aufbau.

Ein solches Lager besitzt eine hohe Steifigkeit und Tragfähigkeit und, da sich Fehler der Führungsbahnen 12a-f in gewissem Umfange herausmitteln, eine hervorragende Laufgenauigkeit.

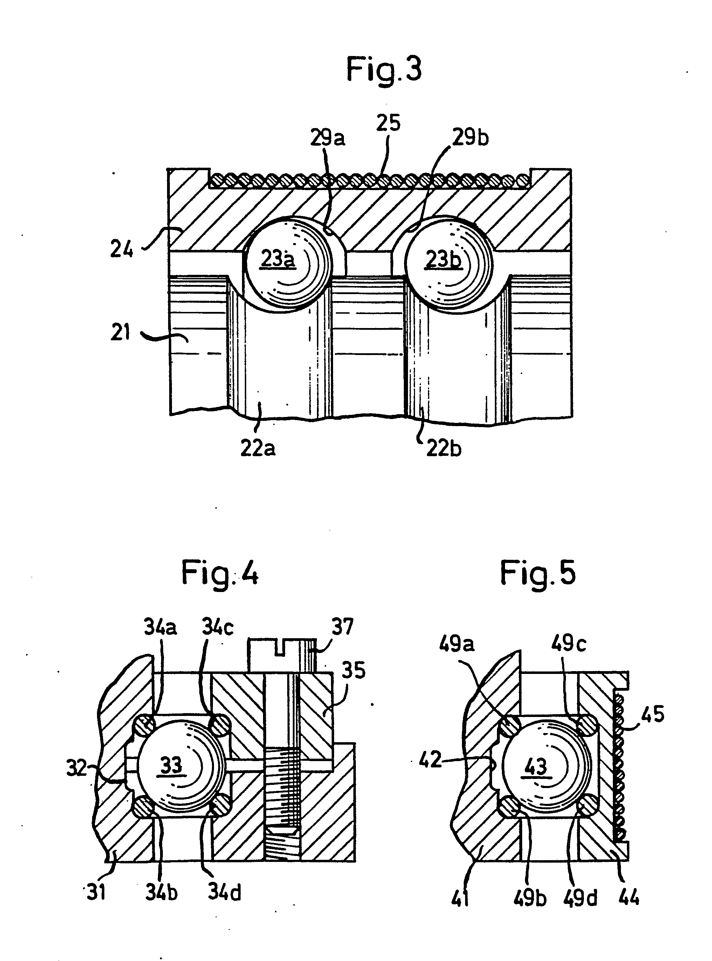

Bei den in den Fig. 1 und 2 beschriebenen Lagern tritt ebenso wie bei den noch zu erläuternden Lagern nach Fig. 4 und 5 zusätzlich zu der reinen Rollreibung eine ""bohrende" Komponente auf, bedingt durch das Abrollen der Kugeln auf jeweils zwei Flanken. Für die Herstellung von extrem leichtgängigen Lagern, die die genannte Reibkomponente nicht aufweisen, empfiehlt sich der in Fig. 3 skizzierte Aufbau: Dort sind in die Welle 21 zwei nebeneinanderliegende, nutenförmige Laufbahnen 22a und 22b eingeschliffen. Der Außenring 24 trägt ebenfalls zwei Laufbahnen 29a und 29b, deren Abstand jedoch vom Abstand der Laufbahnen 22a und 22b abweicht, so daß die darin laufenden Kugeln der Reihen 23a und 23b jeweils nur an einer Flanke der Bahnen 22 und 29a bzw. 22 und 29b abrollen.

Die Laufbahnen 22a und 22b können ebenso wie die Laufbahnen 29a und 29b in jeweils einer Aufspannung hochgenau und bezüglich ihres Durchmessers übereinstimmend gefertigt werden. Das Absolutmaß der Laufbahndurchmesser erfordert dagegen keine engen Toleranzen.

In Fig. 4 ist ein herkömmliches sogenanntes Franke-Drahtkugellager dargestellt, bei dem in eine Nut 32 des Innenringes 31 zwei Drähte 34a und 34b eingelegt sind, auf denen die Kugeln 33 abrollen. Die äußere Laufbahn wird von zwei weiteren Drähten 34c und 34d gebildet, die in einer Nut des radial zweigeteilten Außenringes liegen. Zur Verspannung des Lagers werden üblicherweise Schrauben 37 verwendet, mit denen die zwei Teile 35 und 36 des Außenringes zusammengezogen werden.

Derartige Drahtkugellager besitzen wegen der umfänglich verteilten Spannschrauben recht große Abmessungen.

In Fig. 5 ist ein gemäß der Erfindung aufgebautes, abgewandeltes Drahtkugellager dargestellt:

In die Nut 47 der Welle 41 sind wieder zwei Drähte 49a und 49b eingelegt, auf denen die Kugeln 43 abrollen. Die Nut des Außenringes 44 enthält ebenfalls wieder zwei Drähte 49c und 49d, die die äußere Laufbahn bilden. Der dünnwandige Außenring 44 ist allerdings nicht radial geteilt sondern axial mit einem Schlitz versehen und mit Hilfe von mehreren Lagen eines darum gelegten, elastischen Drahtes 45 verspannt.

Aufgrund der kontinuierlich über den Umfang verteilten, rein radial gerichteten Spannkraft besitzt dieses Lager eine sehr viel höhere Laufgenauigkeit als das an diskreten Punkten mittels Schrauben verspannte Lager aus Fig. 4. Daneben besitzt das Lager aus Fig. 5 bedeutend geringere Abmessungen.

## Patentansprüche

1. Wälzlager für Radialbewegungen, dessen innerer Laufring direkt von der mit einer angearbeiteten Laufbahn versehenen Welle (1; 11; 21; 41) gebildet wird und dessen Außenring (4; 14; 24; 44) einen Schlitz (7) quer zur Laufrichtung der Wälzkörper besitz und gegen die Wälzkörper verspannt ist, deren Durchmesser so gewählt ist, daß der Schlitz (7) in gespanntem Zustand des Lagers eine endliche Breite besitzt, dadurch gekennzeichnet, daß
- die Wälzkörper Kugeln sind, die direkt auf den Flanken von einer in die Welle eingeschliffenen Nut (2; 12; 22; 29) oder auf in die Nut (24) eingelegten Drähten (49) abrollen,
- die Verspannung durch um den Außenring gelegte Spannringe oder Drähte aufgebracht ist und
- der dünnwandige, durch die Verspannung an die innere Laufbahn angepaßte Außenring mit Fügemitteln in das äußere Lagerteil (6; 16) eingebettet ist.

2. Wälzlager nach Anspruch 1, dadurch gekennzeichnet, daß die Laufbahn (9) des Außenringes (4) im Bereich des Schlitzes (7) bzw. Bruches angeschrägt ist.

3. Wälzlager nach Anspruch 1, dadurch gekennzeichnet, daß in die Welle (11) mehrere Laufbahnen (12a-f) eingeschliffen sind und jeder Laufbahn je ein separater, geschlitzter Außenring (14a-f) zugeordnet ist.

4. Wälzlager nach Anspruch 1, dadurch gekennzeichnet, daß die Laufbahnen als Doppelnuten (22, 29) ausgebildet sind, denen jeweils ein gemeinsamer, geschlitzter Außenring (24) zugeordnet ist, und die Abstände der Nuten (22) in der Welle (21) und der Nuten (29) in dem Außenring (24) unterschiedlich sind.

5. Verfahren zur Herstellung eines Wälzlagers nach Anspruch 1, dadurch gekennzeichnet, daß die innere Laufbahn (2; 12; 22; 42) für die Kugeln (3; 13; 23; 43) hochgenau in die Welle (1; 11; 21; 41) eingeschliffen wird, daß anschließend ein mit der äußeren Laufbahn (9; 29; 49) versehener, geschlitzter Lagerring (4; 14; 24; 44) um die Welle gelegt wird, daß dieser Lagerring gedehnt wird und die Kugeln (3; 13; 23; 43) in die Laufbahnen eingefüllt werden, daß anschließend der Ring mit einem unter konstanter Spannung stehenden Draht (5; 15; 25; 45) bzw. Band umwickelt wird und schließlich das Lager in sein Gehäuse (6; 16) eingebettet wird.

6. Verfahren nach Anspruch 5, dadurch gekennzeichnet, daß die Welle (11) in einer Maschinenaufspannung mit mehreren Laufbahnen (12a-f) versehen wird.

## Claims

1. A radial rolling contact bearing having an inner ring which is formed directly by the shaft (1; 11; 21; 41) provided with an inner raceway, and having an outer ring (4; 14; 24; 44) which is provided with a split (7) transverse to the running direction of the rolling elements and is clamped against the rolling elements, the diameter of said rolling elements being so selected, that the split (7) has a finite gap in the clamped condition of the bearing, characterized by the fact, that
- the rolling elements are balls which roll directly on the sides of a groove (2; 12; 22; 29) ground into the shaft or on wires (49) inserted in the groove,
- the clamping force is created by clamp rings or wires placed over the outer ring and
- the thin walled outer ring being adapted to the form of the inner raceway by the clamping force is bedded by jointing means into the outer bearing part (6; 16).

2. A rolling contact bearing according to claim 1, characterized by the fact that the raceway (9) of the outer ring (4) is beveled in the region of the split (7) or break.

3. A rolling contact bearing according to claim 1, characterized by the fact that a plurality of raceways (12a-f) are ground into the shaft (11) and a separate split outer ring (14a-f) is associated with each raceway.

4. A rolling contact bearing according to claim 1, characterized by the fact that the raceways are developed as double grooves (22, 29) with a common split outer ring (24) associated with them and that the distances apart of the grooves (22) in the shaft (21) and of the grooves (29) in the outer ring (24) are different.

5. A method of manufacturing a rolling contact bearing according to claim 1, characterized by the fact that the inner raceway (2; 12; 22; 42) for the balls (3; 13; 23; 43; 63) is ground with high precision into the shaft (1; 11; 21; 41), that thereupon, a split bearing ring (4; 14; 24; 44) which is provided with the outer raceway (9; 29; 49) is placed around the shaft, that said bearing ring is stretched and the balls (3; 13; 23; 43) are introduced into the raceways, that the ring is then wrapped with a wire (5; 15; 25; 45) or band which is under constant tension, and that finally the bearing is embedded in its housing (6; 16).

6. A method according to claim 9, characterized by the fact that the shaft (11) is provided with a plurality of raceways (12a, 12b....12f) in a single machine chucking.

## Revendications

1. Palier à roulement pour mouvements radiaux, dont la bague intérieure est formée directement par l'arbre (1; 11; 21; 41) pourvu d'un chemin de roulement usiné sur lui et dont la bague extérieure (4; 14; 24; 44) possède une fente (7) transversale à la direction de rotation des eléments roulants et est serrée sur ces éléments, le diamètre de la bague extérieure étant choisi de manière que la fente (7) possède une largeur finie à l'état serré du palier, caractérisé en ce que

- les éléments roulants sont des billes qui roulent directement sur les flancs d'une gorge (2; 12; 22; 29) usinée dans l'arbre, ou sur des fils (49) placés dans la gorge (24),

- le serrage est produit par des anneaux ou des fils de serrage disposés autour de la bague extérieure et

- la bague extérieure, de faible épaisseur de paroi, est adaptée au chemin de roulement intérieur par le serrage et est encastrée au moyen d'un produit de jointoiement dans la partie extérieure du palier (6; 16).

2. Palier selon la revendication 1, caractérisé en ce que le chemin de roulement (9) de la bague extérieure (4) est biseauté au droit de la fente (7) ou fracture.

3. Palier selon la revendication 1, caractérisé en ce que plusieurs chemins de roulement (12a-f) sont usinés dans l'arbre (11) et une bague extérieure, fendue, séparée (14-f) est coordonnée à chaque chemin de roulement.

4. Palier selon la revendication 1, caractérise en ce que les chemins de roulement sont réalisés sous forme de gorges doubles (22, 29), auxquelles est coordonnée chaque fois une bague extérieure, fendue, commune (24), et les espacements des gorges (22) de l'arbre (21) et des gorges (29) de la bague extérieure (24) différent.

5. Procédé pour fabriquer un palier à roulement selon la revendication 1, caractérisé en ce qu'il consiste à usiner le chemin de roulement intérieur (2; 12; 22; 42) pour les billes (3; 13; 23; 43) dans l'arbre (1; 11; 21; 41) et à le rectifier avec une haute précision, à disposer ensuite autour de l'arbre une bague fendue (4; 14; 24; 44), pourvue du chemin de roulement extérieur (9; 29; 49), à élargir cette bague et à introduire les billes (3; 13; 23; 43) dans les chemins de roulement, à entourer la bague ensuite d'un fil (5; 15; 25; 45) ou d'une bande maintenu sous tension constante et, enfin, à encastrer le palier dans son corps de palier (6; 16).

6. Procédé selon la revendication 5, caractérisé en ce que l'arbre (11) est pourvu de plusieurs chemins de roulement (12a-f) lors d'un seul et même ablocage de l'arbre sur la machine à usiner.

# 0 111 125

Fig.1a

Fig.1b

Fig.1c

Fig.2

# Fig.3

# Fig.4

# Fig.5